Europäisches Patentamt

European Patent Office

Office européen des brevets

(19)

(11) Numéro de publication : **0 211 701 B2**

(12) **NOUVEAU FASCICULE DE BREVET EUROPEEN**

(45) Date de publication du nouveau fascicule du brevet : **22.06.94 Bulletin 94/25**

(51) Int. Cl.⁵ : **F16D 13/68**

(21) Numéro de dépôt : **86401276.0**

(22) Date de dépôt : **12.06.86**

(54) **Dispositif amortisseur de torsion, notamment pour embrayage de véhicule automobile, à amortissement au moins partiellement dû à un élément élastomère.**

(30) Priorité : **14.06.85 FR 8509017**

(43) Date de publication de la demande : **25.02.87 Bulletin 87/09**

(45) Mention de la délivrance du brevet : **04.10.89 Bulletin 89/40**

(45) Mention de la décision concernant l'opposition : **22.06.94 Bulletin 94/25**

(84) Etats contractants désignés : **DE IT**

(56) Documents cités : DE-A- 2 639 661 DE-A- 2 916 254 DE-A- 3 227 991 DE-A- 3 500 176 FR-A- 2 386 729

(56) Documents cités : FR-A- 2 493 447 FR-A- 2 494 795 GB-A- 2 068 508 GB-A- 2 068 508 US-A- 2 299 029 PATENTS ABSTRACTS OF JAPAN, vol. 7, no. 74 (M-203)[1219], 26 mars 1983; & JP-A-58 631 (AISHIN SEIKI K.K.) 05-01-1983

(73) Titulaire : **VALEO** **64 Avenue de la Grande Armée** **F-75017 Paris (FR)**

(72) Inventeur : **Lanzarini, Ernesto** **Strada Torino 65** **I-10024 Moncalieri (TO) (IT)** Inventeur : **Franchi, Renzo** **Via Trinita 19** **I-10026 Santena (TO) (IT)**

(74) Mandataire : **CABINET BONNET-THIRION** **95 Boulevard Beaumarchais** **F-75003 Paris (FR)**

EP 0 211 701 B2

Jouve, 18, rue Saint-Denis, 75001 PARIS

## Description

La présente invention concerne, d'une manière générale les dispositifs amortisseurs de torsion, notamment pour embrayages de véhicules automobiles, qui comportent au moins trois éléments coaxiaux, à savoir un moyeu mené, un voile de moyeu entraînant ce dernier en rotation avec jeu, et un ensemble d'entraînement comportant un disque porte-garnitures, ces éléments coaxiaux étant montés rotatifs les uns par rapport aux autres à l'encontre de moyens élastiques présentant au moins deux niveaux de raideur, et pour au moins deux secteurs de débattements angulaires déterminés limités par des courses angulaires entre des moyens d'engrènement.

Ces moyens d'engrènement sont, en pratique, de manière connue en soi, de deux genres:

- un premier genre de moyen d'engrènement dit principal, dont le débattement angulaire se fait à l'encontre de moyens élastiques dits principaux, présentant la plus forte raideur, est constitué d'au moins un moyen d'entraînement apte à se déplacer angulairement entre deux moyens de butée.

Ce moyen d'entraînement est, dans de nombreux cas, constitué d'au moins une entretoise axiale, le plus souvent une entretoise entre le disque porte-garnitures dont elle est solidaire et un élément rotatif ainsi solidarisé en rotation avec ce dernier et en est maintenu axialement à une distance déterminée.

De façon classique, également, les deux moyens de butée, déterminant le débattement angulaire circonférentiel de chaque colonnette, sont constitués par les bords sensiblement radiaux d'une échancrure ménagée dans des éléments rotatifs, le voile de moyeu par exemple, se trouvant axialement interposé entre le disque porte-garnitures et ledit élément rotatif solidaire de celui-ci.

Un deuxième genre de moyen d'engrènement dit secondaire, dont le débattement angulaire se fait à l'encontre de moyens élastiques dits secondaires, présentant la plus faible raideur, est constitué de l'engagement de deux moyens de dentures concentriques présentant un jeu angulaire déterminé.

Ainsi, lorsqu'un couple de torsion est appliqué à partir de la partie menante, celle-ci dans une première phase se déplace relativement à la partie menée en rotation à l'encontre des moyens élastiques secondaires, de plus faible raideur, jusqu'à ce que les limites de débattement angulaire du moyen d'engrènement secondaire soient atteintes.

Si le couple de torsion est tel que ces limites soient atteintes, le déplacement relatif à la partie menée, c'est-à-dire le moyeu, se fait au delà de ces limites dans une deuxième phase à l'encontre des moyens élastiques principaux, de raideur supérieure qui, vu leur raideur par rapport à celle des moyens élastiques secondaires, se comportent comme un bloc rigide durant la première phase.

Si les limites de débattement angulaire du moyen d'engrènement principal sont atteintes, le couplage entre parties menantes et parties menées est total.

Ce débattement angulaire entre le disque porte-garnitures et le moyeu se fait donc successivement à l'encontre de deux étages de moyens élastiques de raideurs différentes et de moyens de frottement. Ceci permet, de manière connue, de filtrer les vibrations notamment quand le véhicule est au "point mort". En pratique les moyens élastiques secondaires sont disposés sur une circonférence de plus petit diamètre que les ressorts principaux.

L'avantage présenté par un dispositif amortisseur de torsion à deux étages successifs de raideur est de permettre une plus grande progressivité que celle présentée par un seul étage de raideur, c'est-à-dire utilisant un seul genre de moyens élastiques.

En effet, traditionnellement, les moyens élastiques sont des ressorts à boudin disposés circonférentiellement dans des fenêtres ménagées à cet effet dans les différents éléments rotatifs mis en oeuvre.

Or, les ressorts présentent une fonction (déplacement/force) linéaire. Ceci implique que la fonction déterminée par le comportement d'un tel dispositif, s'exprimant en termes de (débattement angulaire/couple), présente des seuils, déterminant des plages de fonctionnement linéaires.

Dans la pratique, cela se traduit par un manque de progressivité de l'accouplement des différentes pièces en rotation.

Outre les désagréments d'usage impliqués, l'usure des pièces s'en trouve accélérée.

Pour remédier au problème du manque de progressivité de fonctionnement des dispositifs amortisseurs de torsion à un seul étage de raideur, des dispositifs plus complexes à deux étages de raideur, et de débattements correspondants, dont la structure et le fonctionnement ont été succinctement décrits ci-dessus, ou même plusieurs étages de raideur, ont été développés.

On comprendra que, bien évidemment, la multiplication des étages de raideur et de débattements, améliore la progressivité de fonctionnement du dispositif.

Cependant, une telle multiplication présente plusieurs inconvénients:

- D'une part, la relative complexité de construction, et par là même le coût, s'en trouvent accrus.
- D'autre part, l'encombrement axial du dispositif tend à s'accroître, afin de permettre le logement des différents moyens élastiques.

De plus, le logement des moyens élastiques dans des fenêtres découpées dans les éléments rotatifs tend à affaiblir ceux-ci. En pratique, ceci détermine des limites impératives à la multiplication des étages de raideur.

L'état de la technique tel qu'il est décrit ci-dessus peut par exemple être illustré par le brevet français N° 2 386 729 qui décrit un amortisseur de torsion à deux étages d'amortissement utilisant des ressorts hélicoïdaux logés dans des fenêtres du voile de moyeu. Par ailleurs, le brevet britannique N° 2 068 508 et le document DE-A-2 916 254 illustrent des tentatives pour remplacer les ressorts hélicoïdaux par des blocs de matériau élastomère. Cependant, le montage de ces blocs se fait par l'intermédiaire de pièces métalliques de formes compliquées, le montage dans l'amortisseur de ces éléments est également compliqué.

L'invention permet de résoudre tous ces problèmes avec un voile de moyeu couplé classiquement au moyeu par l'intermédiaire de moyens d'engrènement à jeu, comme dans le cas du brevet français mentionné ci-dessus, mais ne comportant pas de fenêtre, les ressorts étant remplacés par des blocs de matériau élastomère montés d'une façon différente de celle qui est décrite dans le brevet britannique.

Plus précisément, l'invention concerne donc un dispositif amortisseur de torsion, notamment pour embrayage de véhicule automobile, selon le DE-A-2 916 254, du genre comportant trois parties coaxiales, une partie menante comprenant un disque porte-garniture, une partie menée formant moyeu et une partie intermédiaire, ladite partie menée et ladite partie intermédiaire étant montées rotatives l'une par rapport à l'autre dans des limites déterminées par des moyens d'engrènement à jeu prévus entre elles et à l'encontre de premier et second moyens élastiques à action circonférentielle, aptes à agir circonférentiellement entre elles pour deux plages de débattement angulaire déterminées, dans lequel ledit premier moyen élastique à action circonférentielle comporte au moins un élément annulaire en matériau élastomère, présentant une section transversale au moins partiellement trapézoïdale, la petite base du trapèze étant radialement la plus proche de l'axe du dispositif, ledit élément annulaire faisant partie d'un sous-ensemble incluant ladite partie intermédiaire formant un premier voile de moyeu ainsi qu'un flasque d'adhérence respectivement accolés sur deux faces radiales opposées dudit élément annulaire en matériau élastomère de façon que celui-ci travaille en cisaillement, ledit sous-ensemble étant mécaniquement intercalé entre lesdites parties menante et menée et ledit premier voile de moyeu étant couplé à ladite partie menée par des moyens d'engrènement à jeu précités, caractérisé en ce que le flasque d'adhérence constitue un second voile de moyeu à moyens d'engrènement à jeu avec le moyeu, en ce que ladite partie menante comprenant un disque porte-garniture est solidaire en rotation de l'un des deux voiles de moyeu et en ce que les deux voiles de moyeu engrènent avec le moyeu par des moyens de denture présentant des jeux différents, ledit second voile de moyeu étant disposé coaxialement à distance axiale du premier voile de moyeu, et lesdits voiles de moyeu, étant reliés entre eux par au moins l'élément annulaire en élastomère.

Selon une autre caractéristique un premier voile de moyeu est solidaire en rotation du disque porte-garnitures, et un second voile de moyeu est solidaire en rotation d'une rondelle de guidage concentrique, les deux voiles de moyeu engrenant le moyeu par des moyens de denture présentant des jeux différents.

Selon un autre mode de réalisation, un ensemble voile de moyeu selon l'invention comporte trois voiles de moyeu séparés entre lesquels sont interposés deux éléments annulaires en élastomère, le voile de moyeu se trouvant en position intermédiaire étant un disque plat définissant un plan de symétrie axiale dudit ensemble et les trois voiles de moyeu engrènent le moyeu par des moyens de denture présentant des jeux différents.

Un avantage particulier de la présente invention par rapport à l'art antérieur est l'amélioration de la fiabilité des voiles de moyeu. En effet, ceux-ci, dans les dispositifs amortisseurs de torsion classique, sont découpés de fenêtres qui les affaiblissent nécessairement.

De plus, travaillant en cisaillement entre ses deux faces radiales, l'élément annulaire en élastomère introduit une non-linéarité dans la transmission du couple, du fait des pertes internes propres au matériau.

Une telle non-linéarité constitue, de fait, un amortissement tout à fait souhaitable de cette transmission.

Les caractéristiques et avantages de l'invention ressortiront d'ailleurs de la description qui va suivre, à titre d'exemple, en référence aux dessins annexés dans lesquels:
- la figure 1 est une vue en élévation, partiellement arrachée, d'un dispositif amortisseur de torsion;
- la figure 2 est une vue en coupe selon II-II du même dispositif représenté par la figure 1;
- la figure 2A est une vue correspondant à la figure 2 d'une variante d'exécution;
- la figure 3 est une vue de détail en coupe selon III-III du même dispositif;
- la figure 4 est une vue de détail d'une partie IV de la figure 2;
- la figure 4A correspond à la figure 4, selon une autre variante;
- la figure 5 est une vue en coupe d'une variante;
- la figure 6 est une vue de détail de la partie VI de la figure 5;
- la figure 7 est une vue en coupe d'un dispositif amortisseur de torsion selon l'invention;
- la figure 8 est une vue de détail de la partie VIII de la figure 7;

3

- la figure 9 est une vue schématique partielle en élévation plane de la variante d'exécution de l'invention représentée aux figures 7 et 8;
- la figure 10 est une vue en coupe d'une autre variante d'exécution de l'invention;
- la figure 11 est une représentation symbolique mettant en évidence le fonctionnement de la variante d'exécution de l'invention représentée à la figure 10;
- la figure 12 est une vue en coupe d'un autre amortisseur de torsion;
- la figure 13 est une vue en élévation plane partiellement arrachée de l'amortisseur représenté à la figure 12.

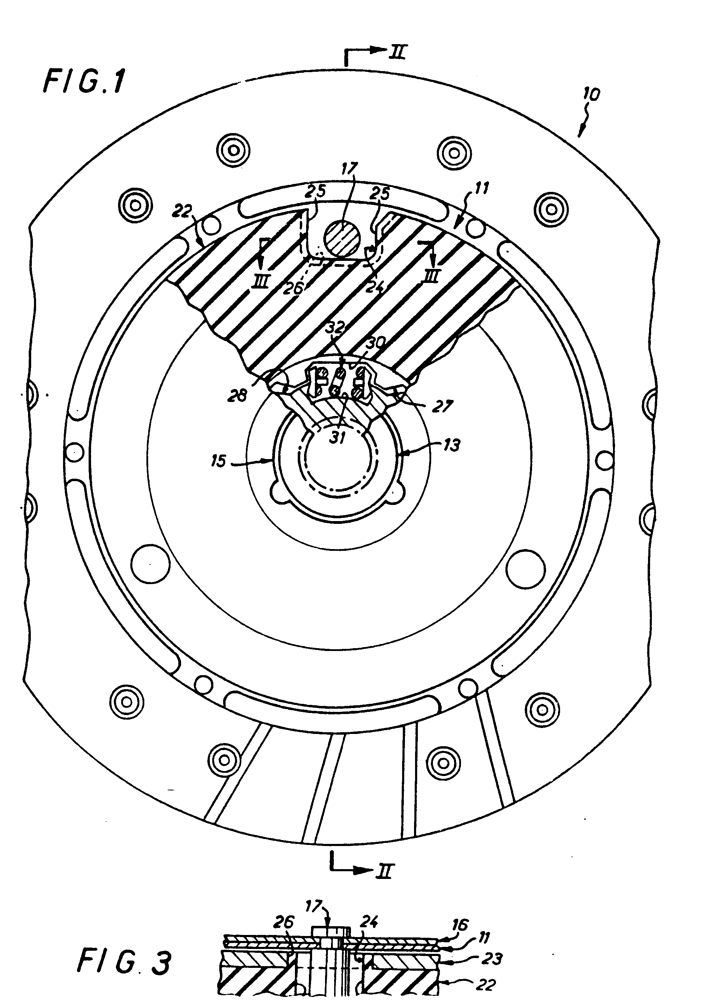

Dans la description qui va suivre, les dispositifs amortisseurs de torsion selon les figures 1 à 6 et 12 et 13 ne font pas partie de l'invention revendiquée.

L'ensemble du dispositif amortisseur de torsion porte la référence générale 10 et comporte, comme le représentent les figures 1, 2, 3 et 4 un voile porte-garnitures 11 solidaire en rotation et coaxial avec un flasque de support 16, lui-même solidaire en rotation d'un palier 14 libre en rotation autour d'un moyeu 13 dont il entoure l'une des extrémités.

Trois entretoises, ici des colonnettes 17, dont les extrémités forment têtes de rivets, s'étendent axialement en saillie du disque porte-garnitures 11 qu'elles solidarisent avec le flasque 16.

Plus précisément, le disque porte-garnitures 11 constitue un anneau dont la zone marginale radialement interne se superpose avec une zone périphérique du flasque 16, établissant ainsi une surface de contact radiale annulaire. Les trois colonnettes, équidistantes par rapport à un axe général 12 du dispositif selon l'invention, sont réparties à 120° et traversent le flasque et le disque porte-garnitures qu'elles solidarisent en formant rivet.

Les autres extrémités des colonnettes 17, à l'opposé du disque porte-garniture, forment également rivet, et solidarisent une rondelle de guidage 18 et un flasque dit d'adhérence 19.

La rondelle 18 et le flasque 19 présentent une zone périphérique annulaire plate par laquelle ils sont solidarisés, avec les têtes des colonnettes 17, qui les traversent en cette zone, prolongée par une zone radiale interne tronconique.

La zone radiale interne tronconique du flasque 18 s'étend jusqu'à rejoindre un palier 15, avec lequel elle est solidaire en rotation. Le palier 15 est libre en rotation autour du moyeu 13. Le flasque 19, radialement moins étendu vers l'intérieur que la rondelle 18, ne rejoint pas le palier 15.

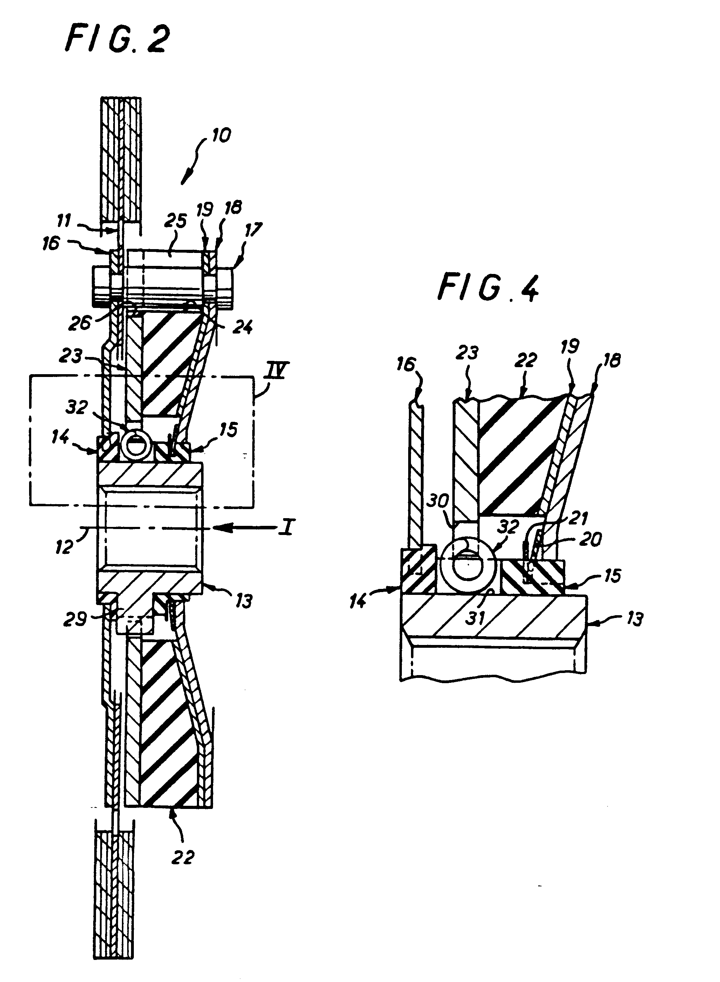

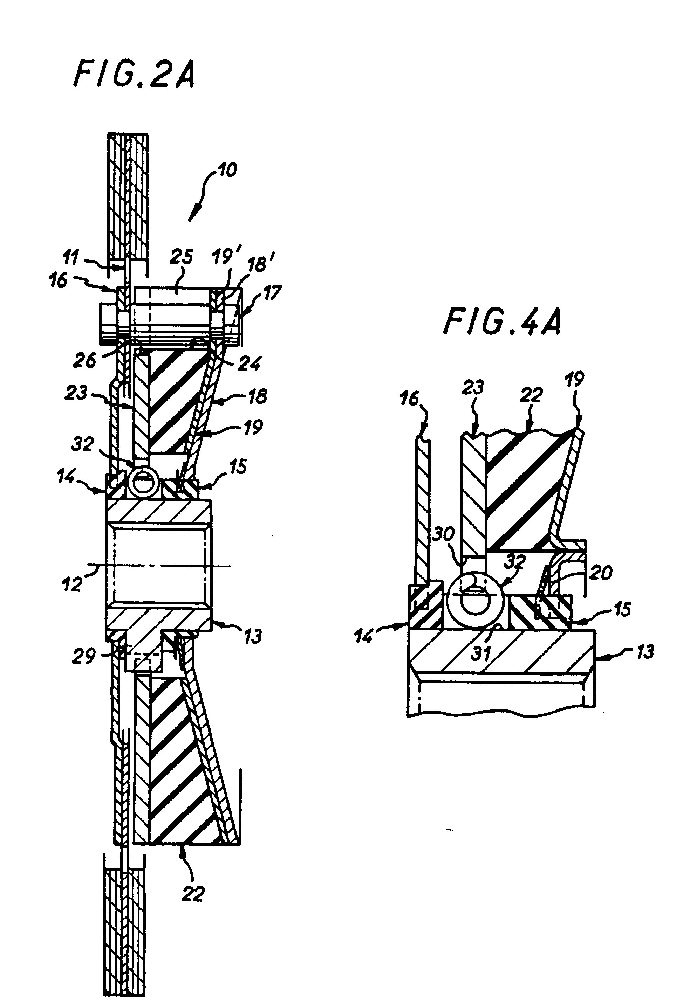

Selon une variante d'exécution représentée à la figure 2A la rondelle 18 et le flasque 19 sont globalement tronconiques, à l'exception cependant d'une récession axiale 18' et 19' respectivement. Ces récessions se superposent exactement, s'étendent dans un plan normal à l'axe des colonnettes 17, et sont localisées autour de l'extrémité de ces dernières. De telles récessions ont pour rôle d'offrir une surface de fixation des têtes des colonnettes 17 normale à l'axe de chacune de celles-ci, pour permettre un rivetage dans de bonnes conditions.

La rondelle de guidage 18 et le flasque d'adhérence 19 s'épousent et sont solidarisés en rotation.

Comme le représente plus particulièrement la figure 4, la liaison en rotation du palier 15 et de la rondelle 18 s'effectue par engrènement de trois saillies radiales en forme de demi-lunes disposées à 120° du palier avec trois évidements correspondants ménagés à cet effet dans la rondelle de guidage. Une rondelle Belleville 20 s'appuie sur la rondelle de guidage 18 et exerce une pression axiale sur le palier 15 qu'elle engrène par les mêmes saillies en demi-lunes.

La section transversale du palier 15 est globalement en L, la partie axialement située en engrènement avec la rondelle 18 présentant le plus petit diamètre externe. Les saillies en demi-lunes rattrapent le diamètre externe le plus grand du palier.

Comme le montre la figure 4, la rondelle 14 engrène le flasque 16 par trois saillies en demi-lunes de façon identique.

Avantageusement, les paliers 14 et 15 sont réalisés en matériau composite.

En variante, comme représenté figure 4A, la rondelle 18 peut être supprimée, le flasque 19 possédant dans ce cas un rebord axial tandis que le palier 15 est porté par un flasque avec un rebord axial lié au rebord axial du flasque 19.

Dans tous les modes de réalisation, un élément annulaire en matière élastomère 22 est solidaire avec le flasque d'adhérence 19, d'une part, et un voile de moyeu 23 d'autre part.

Plus précisément, l'élément annulaire 22 épouse par ses deux faces radiales le flasque d'adhérence 19 et le voile de moyeu 23, auxquels il est solidarisé par adhérisation, procédé connu en soi permettant de solidariser un élément métallique et un élément composite, en élastomère, par exemple, pendant la vulcanisation de ce dernier.

On appréciera que l'extrémité du flasque 19 est située sur une circonférence de diamètre supérieur au diamètre interne ce qui facilite le passage d'un outil et permet de réaliser une vulcanisation de l'élément 22 sur le voile de moyeu et le flasque sans bavure pour former un sous-ensemble. Le voile de moyeu 23 étant un disque métallique plat, l'élément annulaire 22 comporte une première zone périphérique délimitée axialement par le voile de moyeu d'une part, et par la zone périphérique plane, parallèle au voile de moyeu, du flasque d'adhérence 19, d'autre part.

Dans cette première zone sont ménagées trois échancrures 24 s'étendant sur une hauteur radiale et une largeur circonférentielle permettant un débattement circonférentiel des colonnettes 17 dans des échancrures.

Les bords radiaux 25 de échancrures constituent ainsi des butées qui limitent donc le débattement circonférentiel de ces colonnettes.

Trois échancrures 26 ménagées dans le voile de moyeu se superposent sensiblement aux échancrures 24, mais sont plus grandes circonférentiellement que celles-ci, de manière à ce que les colonnettes 17 viennent d'abord buter contre les échancrures 24 de l'élément annulaire 22. L'élément annulaire 22 présente, à partir des échancrures 24, des rebords axialement en saillie qui épousent et recouvrent la tranche des bords des échancrures 26 du voile de moyeu.

Ces rebords en saillie s'étendent axialement sensiblement sur toute l'épaisseur du voile de moyeu 23.

On notera que l'on peut utiliser ainsi un moyeu classique et un voile de moyeu du type standard sans fenêtres.

L'élément annulaire 22 présente une deuxième zone concentrique radialement à l'intérieur de la première, de section trapézoïdale, la petite base du trapèze étant la plus proche de l'axe 12.

Bien entendu, selon la variante d'exécution représentée figure 2A dans laquelle la rondelle 18 et le flasque 19 sont tronconiques avec localement des zones parallèles, l'élément annulaire 22 épouse la forme de la rondelle 18 et du flasque.

Cette section trapézoïdale est délimitée par, d'un côté, le voile de moyeu plan, et de l'autre côté par la partie tronconique du flasque d'adhérence 19.

L'étendue radiale de l'élément annulaire 22 est identique à celle du flasque 19 et sa circonférence interne de l'élément 22 se trouve radialement espacée du voile de moyeu 13 qu'il entoure et plus à l'intérieur que celle dudit flasque 19.

Avantageusement, l'élément annulaire 22 est réalisé en élastomère composite, dont une armature fibreuse est disposée circonférentiellement.

Le voile de moyeu 23 est muni, à sa circonférence interne, d'une denture 27 qui engrène une denture 28 correspondante de configuration complémentaire ménagée à la périphérie d'une saillie radiale 29 ou bride du moyeu 13, cet engrenage comportant un jeu circonférentiel déterminant un débattement angulaire entre le voile de moyeu 23 et le moyeu 13.

Des demi-fenêtres 31, 30 ménagées circonférentiellement en regard dans la saillie radiale 29 du moyeu 13 et à la circonférence interne du voile de moyeu 23, constituent, quand elles sont alignées, une fenêtre dont les bords d'orientation radiale dessinent les deux moitiés d'un X, la ou chaque fenêtre ainsi formée logeant un ressort à boudin 32 disposé circonférentiellement et s'opposent, par compression dudit ressort 32 entre un bord de la demi-fenêtre 30 du voile de moyeu 23 et un bord de la demi-fenêtre 31 du moyeu 13, à tout débattement angulaire entre le voile de moyeu et le moyeu.

Le voile porte-garnitures 11, le flasque de support 16, les colonnettes 17, la rondelle de guidage 18, le flasque d'adhérence 19 ainsi que les paliers 14 et 15 sont donc solidaires en rotation. Globalement, l'ensemble de ces éléments constitue une partie menante.

Le voile de moyeu 23 constitue une partie intermédiaire.

Le moyeu 13 constitue une partie menée.

L'élément annulaire en élastomère 22, solidaire par l'une de ses faces radiales de la partie menante, transmet un couple, imprimé à cette partie par effort de cisaillement circonférentiel, à la partie intermédiaire, c'est-à-dire le voile de moyeu 23 dont il est solidaire par son autre face radiale.

L'élément 22 constitue donc un premier moyen élastique à action circonférentielle.

Ce moyen élastique s'oppose au débattement angulaire entre les colonnettes 17 de la partie menante et les butées 25 des échancrures 24 de l'élément annulaire 22 superposées aux échancrures 26 du voile de moyeu 23, les échancrures et les colonnettes constituant des moyens d'engrènement de la partie menante avec la partie intermédiaire.

Le voile de moyeu 23 engrène avec jeu sur le moyeu 13, c'est-à-dire la partie menée, un débattement angulaire entre ces deux parties se faisant à l'encontre des ressorts 32.

Ainsi, les ressorts 32 constituent un second moyen élastique à action circonférentielle de plus faible raideur pour notamment une bonne filtration des bruits de ralenti.

Un ensemble voile de moyeu comporte dans ce mode de réalisation, une rondelle de guidage 18, un flasque d'adhérence 19, un premier moyen élastique constitué par un élément annulaire 22, un voile de moyeu 23, et un second moyen éalstique constitué de ressorts 32 disposés circonférentiellement et partiellement

5

dans des demi-fenêtres 30 du voile de moyeu.

Il est commode, dans le cas présent, de considérer l'ensemble voile de moyeu comme un tout, comportant deux moyens élastiques au moins.

Avantageusement, les premiers moyens élastiques offrent une raideur supérieure à celle des seconds moyens élastiques en étant disposés radialement au-dessus des seconds moyens.

Ainsi, lorsqu'un couple est transmis par le disque porte-garnitures au moyeu (fonctionnement dit "direct") ou au contraire que le disque porte-garnitures tend à freiner un couple d'inertie transmis au moyen (fonctionnement dit "rétro"), un débattement angulaire se produit entre ces deux éléments, par l'intermédiaire de l'ensemble voile de moyeu.

Plus précisément, les seconds moyens élastiques de faible raideur, se compriment jusqu'à venue en butée des dentures engrenant le moyeu et le voile de moyeu.

Une fois le moyeu et le voile de moyeu engrenés et solidaires en rotation dans le sens du couple relatif entre la partie menante et la partie menée, ce couple relatif tend à solliciter les premiers moyens élastiques, de raideur supérieure qui, vu leur raideur, se comportent comme des blocs rigides dans la première phase.

Si le couple relatif est supérieur au couple résistant développé par les premier et second moyens élastiques, quand ceux-ci arrivent à saturation, ce qui en principe n'arrive que dans des circonstances exceptionnelles (notamment à-coups, etc...), les colonnettes 17 viennent en contact des butées 25, ce qui se produit sans choc du fait que celles-ci sont constituées d'un rebord en matériau élastomère recouvrant les tranches des bords de l'échancrure du voile du moyeu, qui s'écrase progressivement.

Le couplage, dans ce cas, devient direct jusqu'à affaiblissement du couple relatif.

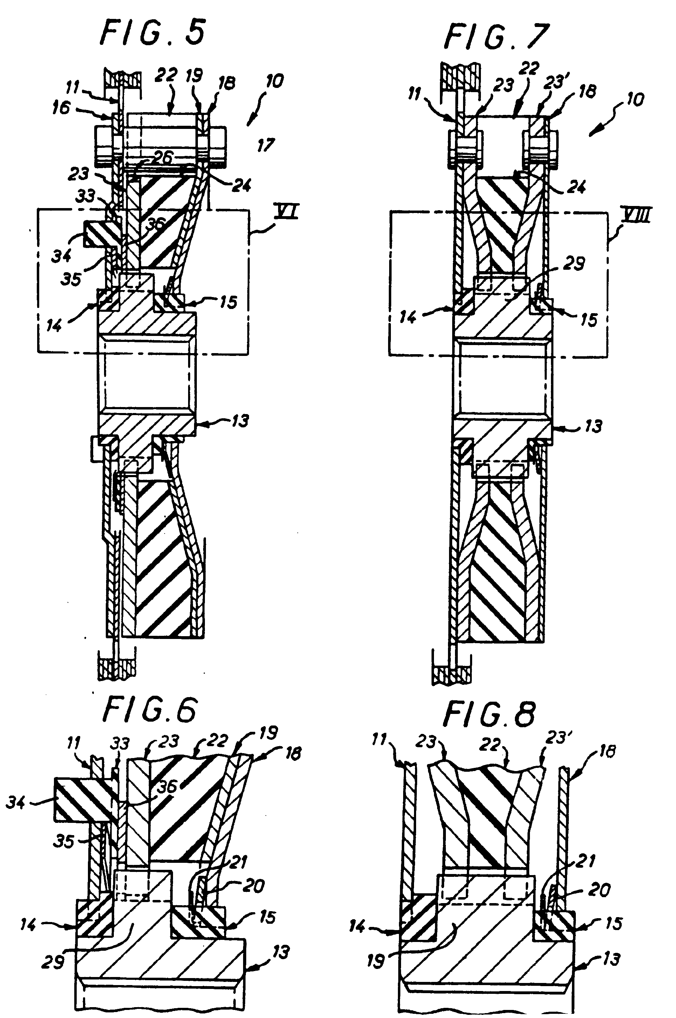

Les figures 5 et 6 représentent une variante d'un dispositif amortisseur de torsion dans laquelle une rondelle d'appui 33, munie de saillies axiales 34 sensiblement cylindriques sur l'une de ses faces, est pressée contre la face du voile de moyeu 23 restant libre par une rondelle élastique 35, par exemple du type rondelle Belleville ondulée, celle-ci prenant appui sur le flasque 16.

Les saillies 34 pénètrent dans des orifices ménagés à cet effet dans le flasque de support 16 avec un jeu suffisant pour permettre un mouvement axial relatif entre la rondelle d'appui 33 et le flasque 16 tout en les solidarisant en rotation.

Avantageusement, la rondelle d'appui 33 est réalisée en matériau composite, et appuie sur une rondelle de friction 36 solidaire en rotation avec le moyeu 13.

Ainsi, le débattement angulaire entre la partie menante 11 et la partie menée 13 est freiné par la friction engendrée par la mise en contact des rondelles d'appui 33 et de friction 36 respectivement solidaires des parties menante et menée, friction déterminée par la force axiale de la rondelle Belleville 35.

Les forces de frottement, différentes par nature des forces élastiques, se combinent donc à celles-ci, déterminées par les deux moyens élastiques, pour donner à l'entraînement de la partie menée par la partie menante les caractéristiques de progressivité voulues.

Selon un mode de réalisation représenté aux figure 7 et 8, un ensemble voile de moyeu comporte deux voiles de moyeu sensiblement identiques 23 et 23′ disposés en regard l'un de l'autre et présentant chacun une zone périphérique en forme de disque plat, une zone intermédiaire tronconique et une zone marginale interne en forme de disque plat.

Un élément annulaire en élastomère 22 est interposé et adhérisé aux deux faces en regard des deux voiles de moyeu qui s'engrènent avec deux niveaux de jeux différents sur une saillie radiale 29 du moyeu 13.

Le voile de moyeu 23 est solidarisé par rivetage au disque porte-garnitures 11, plat, directement monté solidaire en rotation avec le palier 14, libre en rotation autour d'une extrémité du moyeu 13.

Le deuxième voile de moyeu 23′, solidarisé par rivetage à une rondelle de guidage 18 plane, qui s'engrène avec un palier poussé axialement par une rondelle Belleville prenant appui sur la rondelle de guidage 18 et par l'intermédiaire d'une rondelle d'appui, comme décrit précédemment, est apte à venir en butée contre la saillie radiale 29.

Le débattement angulaire entre le voile de moyeu 23 et le moyeu 13 est inférieur au débattement angulaire entre le voile de moyeu 23′ et le moyeu.

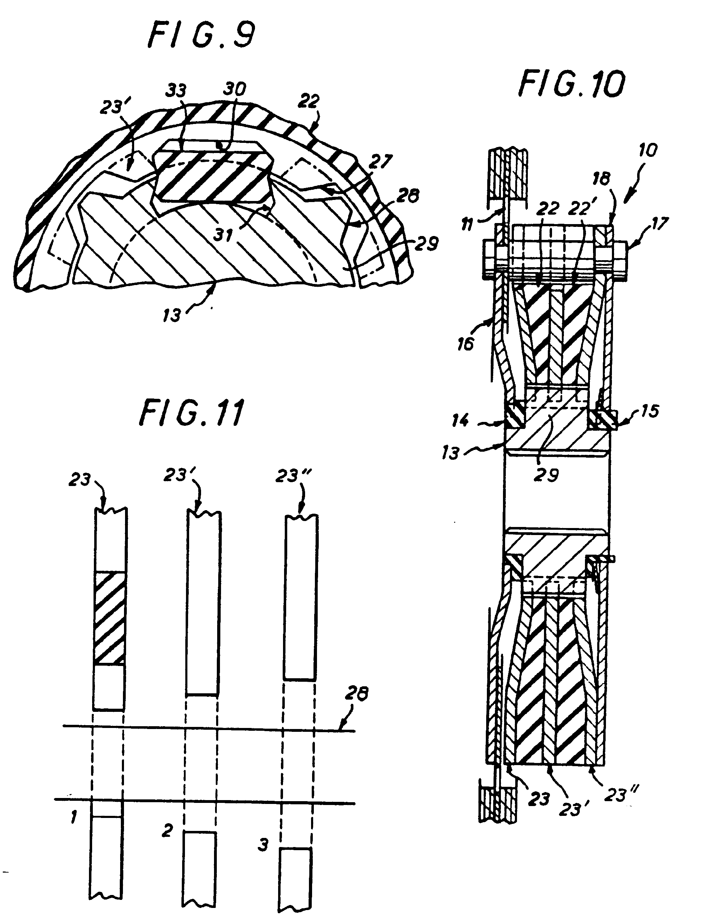

Des dentures femelles 27 (figure 9) ménagées dans le voile de moyeu 23 et des dentures femelles, plus larges, ménagées dans le voile de moyeu 23′ s'engrènent avec des dentures mâles 28 de la saillie radiale 29 du moyeu.

Comme précédemment décrit, des demi-fenêtres 30, 31 ménagées dans le voile de moyeu 23 et dans la saillie 29 du moyeu 13 sont disposées en regard, de manière à recevoir des moyens élastiques dits seconds.

Bien entendu les deux voiles de moyeu 23 et 23′ peuvent être identiques, les dentures 27 étant alors identiques, tandis que les dentures mâles 28 de la saillie radiale 29 du moyeu sont différentes.

Dans ce mode de réalisation, ces seconds moyens élastiques sont constitués de blocs 33 dits en "X" sensiblement parallélépipédiques, avec des encoches latérales en angle obtus, donnant un aspect de X. Avanta-

EP 0 211 701 B2

geusement, ces blocs en X sont en élastomère.

L'élément annulaire élastomère 22 constitue le premier moyen élastique, de plus forte raideur de par sa position radiale et son étendue radiale, que les seconds moyens élastiques.

Ces deux moyens élastiques s'opposent successivement au couple relatif entre parties menante et menée de façon similaire à ce qui a été décrit précédemment.

Les figure 10 et 11 représentent une autre variante d'exécution comportant trois débattements angulaires différents, et trois niveaux de raideurs différents.

Dans ce cas, l'ensemble voile de moyeu comporte trois voiles de moyeu concentriques 23, 23′, 23″, disposés axialement séparés par deux éléments annulaires élastomères 22 et 22′. Un premier voile de moyeu 23 est adhérisé à un premier élément annulaire élastomère 22, présentant, comme dans le premier mode de réalisation décrit, une partie périphérique de section transversale rectangulaire et une partie interne de section trapézoïdale.

Le premier voile de moyeu 23 est de forme adaptée à épouser une première face radiale de cet élément annulaire 22.

Le deuxième voile de moyeu 23′ est un disque plat disposé axialement en position médiane auquel sont adhérisées les deux faces plates des éléments 22 et 22′.

Le deuxième élément annulaire élastomère 22′ est sensiblement identique au premier 22.

Le troisième voile de moyeu 23″ est symétrique par rapport au plan du deuxième voile de moyeu 23′ du premier voile de moyeu 23, dont il a également la forme.

Les voiles de moyeu 23, 23′, 23″ s'engrènent tous trois par des dentures femelles avec des dentures mâles de la saillie radiale 29 du voile de moyeu, avec trois débattements angulaires respectifs différents, allant par ordre croissant.

Pour expliciter la combinaison des différents jeux mis en oeuvre, on se reportera au tableau ci-dessous:

| Ordre de contact | Moyen élastique |
|---|---|
| 1 | 33 |
| 2 | 22 + 22′ |
| 3 | 22′ |

Les éléments élastomères 22 et 22′, après saturation du premier moyen élastique, tendent à s'opposer au débattement angulaire résiduel entre le deuxième voile de moyeu 23′ et le moyeu. Ils constituent ainsi un deuxième moyen élastique.

Après le contact avec les colonnettes du deuxième voile de moyeu 23′, un débattement angulaire résiduel subsiste entre le troisième voile de moyeu 23″ et le moyeu, débattement auquel s'oppose encore le deuxième moyen élastique, mais seulement avec la partie restante de l'élément annulaire élastomère 22′.

Des échancrures ménagées dans les premier et deuxième voiles de moyeu permettent le passage de colonnettes 17 qui solidarisent le disque porte-garnitures 11, le flasque de support 16 et le troisième voile de moyeu 23″.

La figure 11 représente de façon schématique les différents débattements angulaires entre les trois voiles de moyeu 23, 23′, 23″ et la saillie radiale du moyeu 29, dont seule une dent 28 est représentée.

Comme décrit précédemment, le débattement circonférentiel des colonnettes, entre les bords radiaux des échancrures formant butée, détermine le débattement angulaire possible entre les voiles de moyeu successifs.

Les supports de l'ensemble voile de moyeu ainsi constitué autour du moyeu sont des paliers 14 et 15, similaires à ceux mis en oeuvre dans les modes de réalisation précédemment décrits.

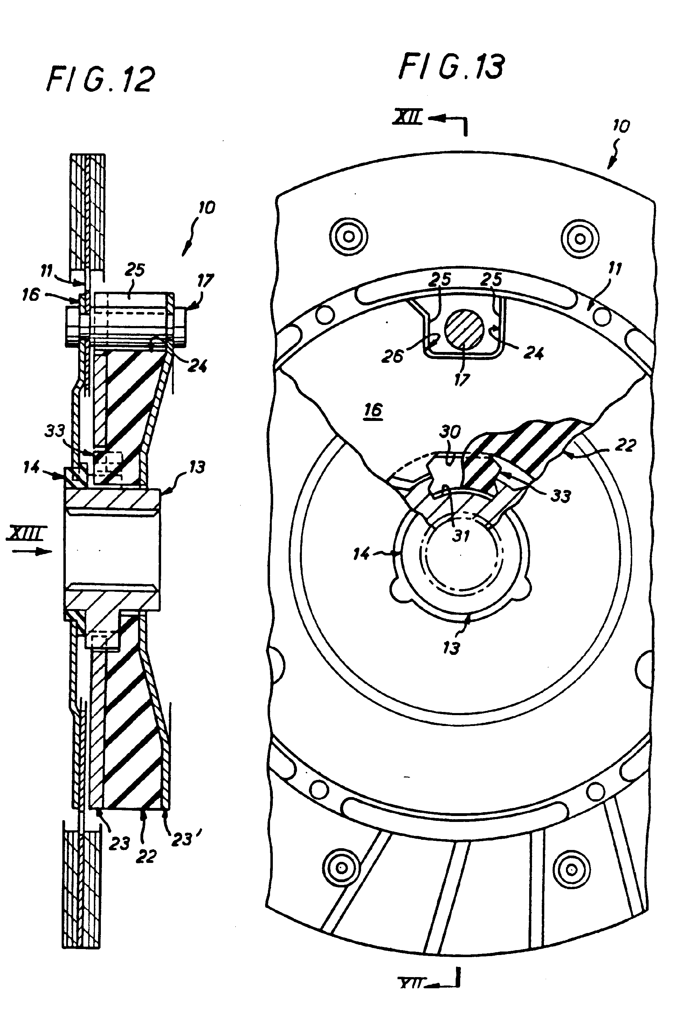

Les figures 12 et 13 représentent une autre variante d'exécution, dans laquelle un voile de moyeu 23 dit "principal", plan, est disposé en regard d'un voile de moyeu 23′ dit "secondaire", de forme partiellement tronconique, et partiellement plane, comme décrit ci-avant dans les autres modes de réalisation, ces voiles étant séparés par un élément annulaire en élastomère 22 adhérisé sur ses deux faces aux deux voiles de moyeu.

Le voile de moyeu secondaire 23′ est solidaire par l'intermédiaire de trois colonnettes 17 du disque porte-garniture 11.

L'élément annulaire élastomère 22 comporte des échancrures à sa périphérie, ainsi que le voile de moyeu principal 23, échancrures permettant un débattement circonférentiel des colonnettes 17, et dont les bords sont recouverts de bordures en saillies axiales de l'élément 22, de façon similaire à celle exposée dans la description de la première variante d'exécution de l'invention.

Le voile de moyeu principal 23 s'engrène par denture disposée à sa circonférence interne avec une denture correspondante du moyeu, comme décrit précédemment.

7

EP 0 211 701 B2

De même, des demi-fenêtres en regard coopèrent afin de former des fenêtres aptes à recevoir des seconds moyens élastiques.

Dans ce mode de réalisation, les seconds moyens élastiques sont des blocs en X constitués par des saillies axiales 33 de l'élément annulaire en élastomère 22, formant également et principalement les premiers moyens élastiques.

Ainsi, dans un ensemble voile de moyeu selon ce mode particulier de réalisation, les premiers et seconds moyens élastiques sont procurés par un seul élément constitutif, à savoir l'élément annulaire en élastomère 22, qui est en l'espèce muni de saillies.

Il en résulte bien évidemment une simplification de la fabrication de l'ensemble voile de moyeu.

Par ailleurs, la mise en oeuvre de cette variante d'exécution, qui permet notamment, à l'instar de la deuxième variante d'exécution décrite, d'obtenir une bonne progressivité de l'action des deux moyens élastiques, tous deux étant réalisés à partir d'éléments en élastomère, permet l'utilisation de pièces conventionnelles, à savoir des voiles de moyeu conventionnels.

Ainsi qu'il ressort à l'évidence de la description il est aisé de créer un sous-ensemble voile de moyeu, élément annulaire en matière élastomère et/ou flasque ou autre voile de moyeu dans un lieu de production et les autres composants dans un autre centre de production puis d'assembler le tout.

## Revendications

1. Dispositif amortisseur de torsion (10), notamment pour embrayage de véhicule automobile, du genre comportant trois parties coaxiales (11, 13, 23), une partie menante comprenant un disque porte-garniture (11), une partie menée formant moyeu (13) et une partie intermédiaire (23), ladite partie menée (13) et ladite partie intermédiaire (23) étant montées rotatives l'une par rapport à l'autre dans des limites déterminées par des moyens d'engrènement à jeu (27, 28) prévus entre elles et à l'encontre de premier et second moyens élastiques à action circonférentielle (22, 22', 33), aptes à agir circonférentiellement entre elles pour deux plages de débattement angulaire déterminées, dans lequel ledit premier moyen élastique à action circonférentielle comporte au moins un élément annulaire en matériau élastomère (22, 22'), présentant une section transversale au moins partiellement trapézoïdale, la petite base du trapèze étant radialement la plus proche de l'axe du dispositif, ledit élément annulaire (22, 22') faisant partie d'un sous-ensemble (22, 22', 23, 23', 23'') incluant ladite partie intermédiaire formant un premier voile de moyeu (23) ainsi qu'un flasque d'adhérence (23', 23'') respectivement accolés sur deux faces radiales opposées dudit élément annulaire en matériau élastomère (22, 22') de façon que celui-ci travaille en cisaillement, ledit sous-ensemble étant mécaniquement intercalé entre lesdites parties menante et menée (11, 13) et ledit premier voile de moyeu (23) étant couplé à ladite partie menée (13) par des moyens d'engrènement à jeu précités (27, 28), **caractérisé en ce que** le flasque d'adhérence constitue un second voile de moyeu (23', 23'') à moyens d'engrènement à jeu avec le moyeu (13), en ce que ladite partie menante comprenant un disque porte-garniture est solidaire en rotation de l'un des deux voiles de moyeu (23, 23'') et en ce que les deux voiles de moyeu engrènent avec le moyeu (13) par des moyens de denture (27, 28) présentant des jeux différents, ledit second voile de moyeu (23', 23'') étant disposé coaxialement à distance axiale du premier voile de moyeu (23), et lesdits voiles de moyeu (23, 23', 23'') étant reliés entre eux par au moins l'élément annulaire en élastomère (22, 22').

2. Dispositif amortisseur de torsion selon la revendication 1, caractérisé en ce que le premier voile de moyeu (23) est solidaire en rotation du disque porte-garnitures (11), et en ce que le second voile de moyeu (23') est solidaire en rotation d'une rondelle de guidage (18), supportée rotativement par ledit moyeu (13).

3. Dispositif amortisseur de torsion selon la revendication 1, caractérisé en ce qu'il comporte trois voiles de moyeu (23, 23', 23'') séparés entre lesquels sont interposés deux éléments annulaires en élastomère (22, 22'), le voile de moyeu (23') se trouvant en position intermédiaire étant un disque plat définissant un plan de symétrie pour l'ensemble, et en ce que ces trois voiles de moyeu (23, 23', 23'') engrènent avec le moyeu (13) par des moyens de denture (27, 28) présentant des jeux différents.

4. Dispositif amortisseur de torsion selon la revendication 3, caractérisé en ce que le premier voile de moyeu (23) engrène avec le moyeu (13) avec un premier jeu angulaire, en ce que le deuxième voile de moyeu (23'), situé axialement en position intermédiaire, engrène avec le moyeu (13) avec un deuxième jeu angulaire supérieur au premier, et en ce que le troisième voile de moyeu (23'') est solidaire en rotation du disque porte-garniture (11) et engrène avec le moyeu (13) avec un troisième jeu angulaire supérieur au

8

deuxième.

5. Dispositif amortisseur de torsion selon l'une quelconque des revendications précédentes, caractérisé en ce que ledit second moyen élastique à action circonférentielle est constitué de blocs en élastomère (33), disposés dans des fenêtres constituées de demi-fenêtres (30, 31) ménagées respectivement et en regard dans les voiles de moyeu (23, 23', 23″) et dans une saillie radiale (29) du moyeu (13) selon une direction généralement circonférentielle, de manière à être sollicité en compression par le jeu angulaire entre les voiles de moyeu (23, 23', 23″) et ladite partie menée (13).

6. Dispositif amortisseur de torsion selon l'une quelconque des revendications précédentes, caractérisé en ce qu'au moins une rondelle de friction (36) est appliquée par l'intermédiaire d'une rondelle élastique (35) exerçant une force d'appui axiale contre le premier voile de moyeu (23) et oppose une force de frottement à un débattement angulaire entre ledit premier voile de moyeu (23) et un élément du support (11, 16) sur lequel ladite rondelle élastique (35) prend appui pour exercer sa force d'appui.


## Patentansprüche

1. Drehschwingungsdämpfer (10), insbesondere für Kraftfahrzeugkupplung, von der Art, die drei koaxiale Teile (11, 13, 23) enthält, einen antreibenden Teil mit einer Belagträgerscheibe (11), einen angetriebenen Teil, der als Nabe (13) dient, und einen mittleren Teil (23), wobei der angetriebene Teil (13) und der mittlere Teil (23) drehbar im Verhältnis zueinander innerhalb der Grenzen angebracht sind, die durch mit Spiel versehene Eingriffsmittel (27, 28) festgelegt sind, welche zwischen ihnen und gegenüber ersten und zweiten am Umfang wirksamen elastischen Elementen (22, 22', 33) vorgesehen sind, die geeignet sind, am Umfang in zwei bestimmten Winkelverschiebungsbereichen zusammenzuwirken, wobei das erste am Umfang wirksame elastische Mittel wenigstens ein ringförmiges Element aus Elastomermaterial (22, 22') mit einem wenigstens teilweise trapezförmigen Querschnitt enthält, bei dem die kleine Trapezbasis radial am nächsten an der Achse der Vorrichtung liegt, wobei dieses ringförmige Element (22, 22') Bestandteil einer Untergruppe (22, 22', 23, 23', 23″) ist, die den genannten mittleren Teil, der einen ersten Nabenflansch (23) bildet, sowie einen Haftflansch (23', 23″) einschließt, die jeweils an zwei radialen, dem genannten ringförmigen Element aus Elastomermaterial (22, 22') gegenüberliegenden Flächen angebaut sind, so daß dieses eine Scherwirkung ausübt, wobei die genannte Untergruppe mechanisch zwischen dem antreibenden und angetriebenen Teil (11, 13) eingefügt und der erste Nabenflansch (23) an dem angetriebenen Teil (13) durch die vorgenannten mit Spiel versehenen Eingriffsmittel (27, 28) angekoppelt ist, **dadurch gekennzeichnet,** daß der Haftflansch einen zweiten Nabenflansch (23, 23″) mit Eingriffsmitteln mit Spiel zur Nabe (13) bildet, daß der antreibende Teil mit einer Belagträgerscheibe drehbar fest mit einem der beiden Nabenflansche (23, 23″) verbunden ist und daß die beiden Nabenflansche durch Verzahungsmittel (27, 28) mit unterschiedlichen Spielen mit der Nabe (13) in Eingriff stehen, wobei der zweite Nabenflansch (23', 23″) koaxial in einem axialen Abstand von dem ersten Nabenflansch (23) angeordnet ist und die genannten Nabenflansche (23, 23', 23″) wenigstens durch das ringförmige Elastomerelement (22, 22') miteinander verbunden sind.

2. Drehschwingungsdämpfer nach Anspruch 1 , **dadurch gekennzeichnet,** daß der erste Nabenflansch (23) drehbar fest mit der Belagträgerscheibe (11) verbunden ist und daß der zweite Nabenflansch (23') drehbar fest mit einer Führungsscheibe (18) verbunden ist, die drehend durch die Nabe (13) gehaltert wird.

3. Drehschwingungsdämpfer nach Anspruch 1 , **dadurch gekennzeichnet,** daß er drei getrennte Nabenflansche (23, 23', 23″) aufweist, zwischen denen zwei ringförmige Elastomerlemente (22,22') eingesetzt sind, wobei sich der Nabenflansch (23') in einer mittleren Stellung befindet und eine flache Scheibe bildet, die eine Symmetrieebene für das Ganze definiert, und daß diese drei Nabenflansche (23, 23', 23″) durch Verzahnungsmittel (27, 28) mit unterschiedlichem Spiel mit der Nabe (13) in Eingriff stehen.

4. Drehschwingungsdämpfer nach Anspruch 3 , **dadurch gekennzeichnet,** daß der erste Nabenflansch (23) mit der Nabe (13) mit einem ersten Winkelspiel in Eingriff steht, daß der zweite Nabenflansch (23'), der axial in einer mittleren Position liegt, mit der Nabe (13) mit einem zweiten Winkelspiel in Eingriff steht, das größer als das erste ist, und daß der dritte Nabenflansch (23″) drehfest mit der Belagträgerscheibe (11) verbunden ist und mit der Nabe (13) mit einem dritten Winkelspiel in Eingriff steht, das größer als das zweite ist.

**5.** Drehschwingungsdämpfer nach einem der vorangehenden Ansprüche , **dadurch gekennzeichnet,** daß das genannte zweite am Umfang wirksame elastische Mittel aus Elastomerklötzen (33) besteht, die in Fenstern angeordnet sind, die aus Halbfenstern (30, 31) bestehen, welche jeweils gegenüber in den Nabenflanschen (23, 23', 23'') und in einem radialen Vorsprung (29) der Nabe (13) in einer allgemeinen Umfangsrichtung angebracht sind, so daß darauf durch das Winkelspiel zwischen den Nabenflanschen (23, 23', 23'') und dem angetriebenen Teil (13) eine Druckbeanspruchung ausgeübt wird.

**6.** Drehschwingungsdämpfer nach einem der vorangehenden Ansprüche , **dadurch gekennzeichnet,** daß wenigstens eine Reibscheibe (36) mittels einer Federscheibe (35) angedrückt wird, die eine axiale Auflagekraft gegen den ersten Nabenflansch (23) ausübt und eine Reibkraft einer Winkelverschiebung zwischen dem ersten Nabenflansch (23) und einem Element des Trägers (11, 16) entgegensetzt, auf dem die genannte Federscheibe (35) aufliegt, um ihre Auflagekraft auszuüben.

**Claims**

**1.** A torsion damping device (10), especially for a motor vehicle clutch, of the kind comprising three coaxial parts (11, 13, 23), a driving part comprising a liner-carrying disc (11), a driven part defining a hub (13), and an intermediate part (23), the said driven part (13) and the said intermediate part (23) being mounted for rotation of one with respect to the other within limits set by loose coupling means (27, 28) arranged between them, and against the action of first and second circumferentially acting resilient means (22, 22', 33) adapted to work circumferentially between them over two predetermined ranges of angular displacement, wherein the said first circumferentially acting resilient means includes at least one annular element (22, 22') of elastomeric material, having a transverse cross section which is at least partially trapezoidal, the minor base of the trapezium being radially the closer to the axis of the device, the said annular element (22, 22') being part of a sub-assembly (22, 22', 23, 23', 23'') that includes the said intermediate part defining a first hub plate (23) together with an adhesion plate (23', 23''), which are attached on two respective opposed radial faces of the said annular element (22, 22') of elastomeric material so that the latter works in shear, the said sub-assembly being interposed mechanically between the said driving and driven parts (11, 13), and the said first hub plate (23) being coupled to the said driven part (13) through the said loose coupling means (27, 28), characterised in that the adhesion plate constitutes a second hub plate (23', 23'') coupled by loose coupling means with the hub (13), in that the said driving part comprising a liner-carrying disc is fixed with respect to one of the two hub plates (23, 23'') for rotation with it, and in that both of the hub plates mesh with the hub (13) through toothed means (27, 28) defining different clearances, the said second hub plate (23', 23'') being arranged coaxially with the first hub plate (23) and spaced axially away from it, and the said hub plates (23, 23', 23'') being connected together by at least the annular elastomeric element (22, 22').

**2.** A torsion damping device according to Claim 1, characterised in that the first hub plate (23) is fixed with respect to the liner-carrying disc (11) for rotation with it, and in that the second hub plate (23') is fixed with respect to a guide ring (18) for rotation with the latter, which is rotatably supported by the said hub (13).

**3.** A torsion damping device according to Claim 1, characterised in that it has three separate hub plates (23, 23', 23'') with two annular elastomeric elements (22, 22') interposed between them, the hub plate (23') that is in an intermediate position being a flat disc which defines a plane of symmetry for the whole, and in that the said three hub plates (23, 23', 23'') mesh with the hub (13) through toothed means (27, 28) defining different clearances.

**4.** A torsion damping device according to Claim 3, characterised in that the first hub plate (23) meshes with the hub (13) with a first angular clearance, in that the second hub plate (23'), in the intermediate axial position, meshes with the hub (13) with a second angular clearance greater than the first, and in that the third hub plate (23'') is fixed with respect to the liner-carrying disc (11) for rotation with it, and meshes with the hub (13) with a third angular clearance greater than the second.

**5.** A torsion damping device according to any one of the preceding Claims, characterised in that the said second circumferentially acting resilient means comprises elastomeric blocks (33), disposed in windows which consist of half-windows (30, 31) which are formed, respectively, and in facing relationship, in the hub plates (23, 23′, 23″) and in a radial projection (29) of the hub (13), in a generally circumferential direction, so as to be put into compression by the angular clearance between the hub plates (23, 23′, 23″) and the said driven part (13).

6. A torsion damping device according to any one of the preceding Claims, characterised in that at least one friction ring (36) is applied through an elastic ring (35) exerting an axial thrust against the first hub plate (23), and opposes a frictional force at an angular displacement between the said first hub plate (23) and a support element (11, 16) on which the said elastic ring (35) bears for the exertion of its thrust.

FIG.1

FIG.3

# FIG. 2

# FIG. 4

# FIG.2A

# FIG.4A

FIG.5

FIG.7

FIG.6

FIG.8

# FIG.9

# FIG.10

# FIG.11

# FIG.12

# FIG.13